(19) Europäisches Patentamt / European Patent Office / Office européen des brevets

(11) **EP 1 850 517 B1**

(12) **EUROPEAN PATENT SPECIFICATION**

(45) Date of publication and mention
of the grant of the patent:
**17.01.2018 Bulletin 2018/03**

(51) Int Cl.:
*H04J 11/00* (2006.01)   *H04B 1/16* (2006.01)
*H04L 7/08* (2006.01)   *H04L 27/26* (2006.01)

(21) Application number: **06713010.4**

(22) Date of filing: **03.02.2006**

(86) International application number:
**PCT/JP2006/301867**

(87) International publication number:
**WO 2006/085487 (17.08.2006 Gazette 2006/33)**

(54) **DIGITAL BROADCAST RECEIVER AND SYNCHRONIZATION DETECTING METHOD**

DIGITAL-AUSSTRAHLUNGSEMPFÄNGER UND SYNCHRONISATIONSDETEKTIONSVERFAHREN

RECEPTEUR D'EMISSIONS NUMERIQUES ET METHODE DE DEDECTION DE SYNCHRONISATION

(84) Designated Contracting States:
**DE GB**

(30) Priority: **14.02.2005 JP 2005035432**

(43) Date of publication of application:
**31.10.2007 Bulletin 2007/44**

(73) Proprietor: **Pioneer Corporation
Tokyo 113-0021 (JP)**

(72) Inventor: **TOKI, Katsuhiko
Nishimachi, Yamada, Kawagoe-shi, Saitam (JP)**

(74) Representative: **Popp, Eugen et al
Meissner Bolte Patentanwälte
Rechtsanwälte Partnerschaft mbB
Postfach 86 06 24
81633 München (DE)**

(56) References cited:
EP-A1- 0 632 606       JP-A- 08 102 769
JP-A- 09 130 363       JP-A- 2000 295 193
JP-A- 2000 315 990     JP-A- 2004 208 286
US-B1- 6 246 735

• GIOVANNI SANTELLA: "A Frequency and Symbol Synchronization System for OFDM Signals: Architecture and Simulation Results", IEEE TRANSACTIONS ON VEHICULAR TECHNOLOGY, IEEE SERVICE CENTER, PISCATAWAY, NJ, US, vol. 49, no. 1, 1 January 2000 (2000-01-01), XP011064010, ISSN: 0018-9545
• KENICHI TAURA ET AL: "A DIGITAL AUDIO BROADCASTING (DAB) RECEIVER", 19960801, vol. 42, no. 3, 1 August 1996 (1996-08-01) , pages 322-327, XP011083459,

## Description

BACKGROUND OF THE INVENTION

The present invention relates to a digital broadcast receiver which receives a digital broadcast, particularly to a digital broadcast receiver which realizes an improved accuracy of a synchronous reception and a speed-up of a synchronization processing or the like.

Generally, in order to receive a digital broadcast being transmitted in a real time, it is necessary to perform a synchronous reception on a receiver side.

In order to perform a synchronous reception, Japanese Unexamined Patent Application Publication No. 2004-208286 has disclosed a broadcast receiver which receives a digital audio broadcast of DAB (Digital Audio Broadcasting) system based on OFDM (Orthogonal Frequency Division Multiplex) manner. Such a broadcast receiver is equipped with a Null symbol detection device for detecting small Null symbols of a transmission power, which are carried by baseband signals and transmitted from a broadcast station side per predetermined frame length (frame period).

As shown in Fig. 1 of the foregoing patent publication, the above-mentioned conventional null symbol detection device comprises: an amplitude detecting unit; a plurality of synchronous adding buffers; a movement averaging unit; a transmission mode judging unit; and a null position detecting unit. Upon selecting and switching on a channel through which a broadcast is to be received, a processing for an initial synchronization will be started, while the amplitude detecting unit will detect envelopes of baseband signals and detect null symbols repeatedly transmitted hereto per predetermined frame length in accordance with a transmission mode, based on a difference between an amplitude of these symbols and that of other symbols.

Subsequently, the synchronous adding buffers each provided corresponding to one transmission mode will measure and accumulate the periods of detected null symbols, while the movement averaging unit will judge the periods of the null symbols in accordance with a movement average value of a plurality of measurement data accumulated in the respective synchronous adding buffers, the transmission mode judging unit will judge a transmission mode in accordance with a judged null symbol period, and the null position detecting unit will generate a synchronism pulse at a start position of a null symbol in accordance with a judgment result of a transmission mode, thereby performing a synchronous reception in accordance with a synchronism pulse.

Patent Document 1: Japanese Unexamined Patent Application Publication No. 2004-208286.

However, the above-described conventional broadcast receiver has been found to have the following problem. Namely, when performing an initial synchronization, an amplitude detecting unit will perform only a level judgment on envelops of baseband signals so as to detect periods of null symbols having a smaller amplitude than other symbols. As a result, at an occasion in which a reception intensity has changed, it is impossible to highly accurately detect the periods of null symbols using only the amplitude detecting unit, nor is it possible to judge a transmission mode in accordance with a detected null symbol period without causing any mistake.

For example, in the DAB broadcast system there have been prescribed four transmission modes "1" - "4" having different frame lengths and different null symbol lengths, with the frame length and null symbol length of transmission mode "1" being 96 msec and 1.297 msec, the frame length and null symbol length of transmission mode "2" being 24 msec and 324 $\mu$ sec, the frame length and null symbol length of transmission mode "3" being 24 msec and 168 $\mu$sec, the frame length and null symbol length of transmission mode "4" being 48 msec and 648 $\mu$sec. Consequently, with regard to a conventional broadcast receiver, it will be impossible to highly accurately detect the respective symbols so as to identify the transmission modes "2" and "3" which have the same frame length but a small difference between their null symbol lengths.

In order to solve the above problem, the foregoing conventional null symbol detection device is so fabricated that after the periods of the respective null symbols over many frame lengths are detected, measured and the respective measurement data are accumulated in the respective synchronous adding buffers, a statistic process will be carried out so that the movement averaging unit will calculate a movement average of many accumulated measurement data, thereby making it possible to detect null symbol periods with a higher precision.

However, when a user tries to obtain an initial synchronism with a broadcast transmitted from a broadcast station side using the above-described method, since it is impossible to confirm an obtained synchronism without detecting many null symbols during a long time period, such an initial synchronization will need a considerable amount of time. For example, when a user or the like has selected a desired broadcast channel, or when a seek or a search for automatically finding a broadcast channel having an acceptable reception condition is performed, the above-described conventional broadcast receiver will need a considerable amount of time to perform an initial synchronization, hence causing a user or the like a worse operation performance and thus an inconvenience.

SUMMARY OF THE INVENTION

The present invention has been accomplished in view of the above-discussed conventional problems, and it is an object of the invention to provide a digital broadcast receiver and a synchronism detection method which can ensure an improved synchronous reception accuracy and a quickened synchronization processing. The invention is as set out in the appended claims.

## BRIEF DESCRIPTION OF THE DRAWINGS

Fig. 1 provides a block diagram showing the composition of a digital broadcast receiver of the present invention, and a chart schematically showing a frame structure of a transmission signal transmitted from a broadcast station side.

Fig. 2 provides waveform charts showing operations of a synchronism signal detecting section provided in the digital broadcast receiver shown in Fig. 1.

Fig. 3 provides a block diagram showing the composition of a digital broadcast receiver of embodiment 1, and another block diagram showing the composition of the synchronism signal detecting section.

Fig. 4 is a block diagram showing an example of the composition of a quadrature demodulator provided in the digital broadcast receiver shown in Fig. 3.

Fig. 5 is a flow chart showing an operation of the digital broadcast receiver of embodiment 1.

Fig. 6 is a chart showing a time error correction principle of the digital broadcast receiver of embodiment 1.

Fig. 7 is a block diagram showing the composition of a modified synchronism signal detecting section provided in the digital broadcast receiver of embodiment 1.

Fig. 8 is a block diagram showing the composition of a digital broadcast receiver of embodiment 2.

Fig. 9 provides block diagrams showing the composition of a digital broadcast receiver of embodiment 3.

Fig. 10 provides block diagrams showing the composition of a digital broadcast receiver of embodiment 4 and the composition of a frequency converter.

Fig. 11 is a block diagram showing the composition of a digital broadcast receiver of embodiment 5.

## DETAIL DESCRIPTION OF THE PREFERRED EMBODIMENTS

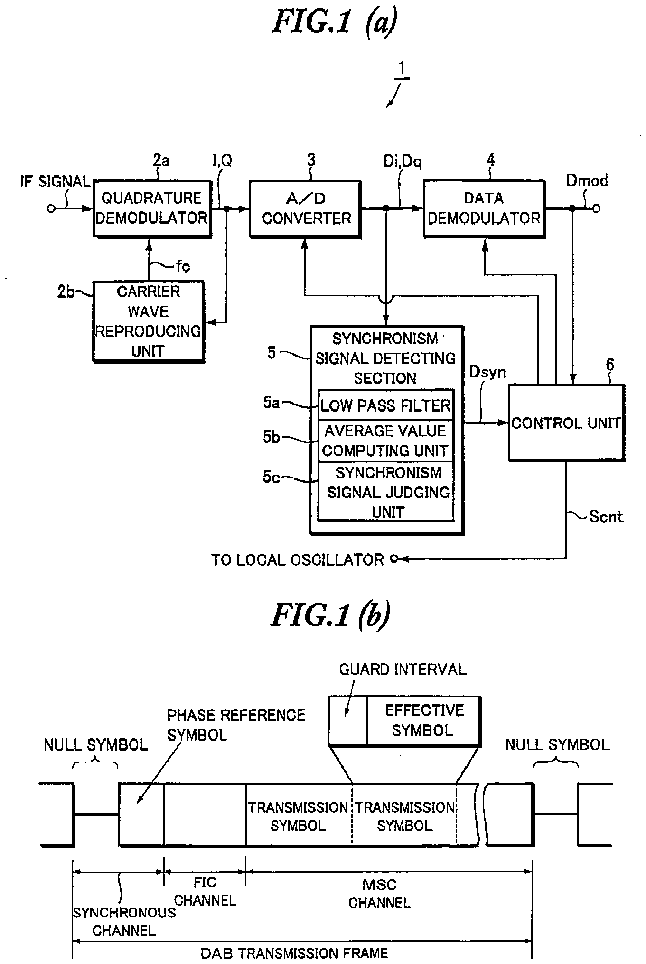

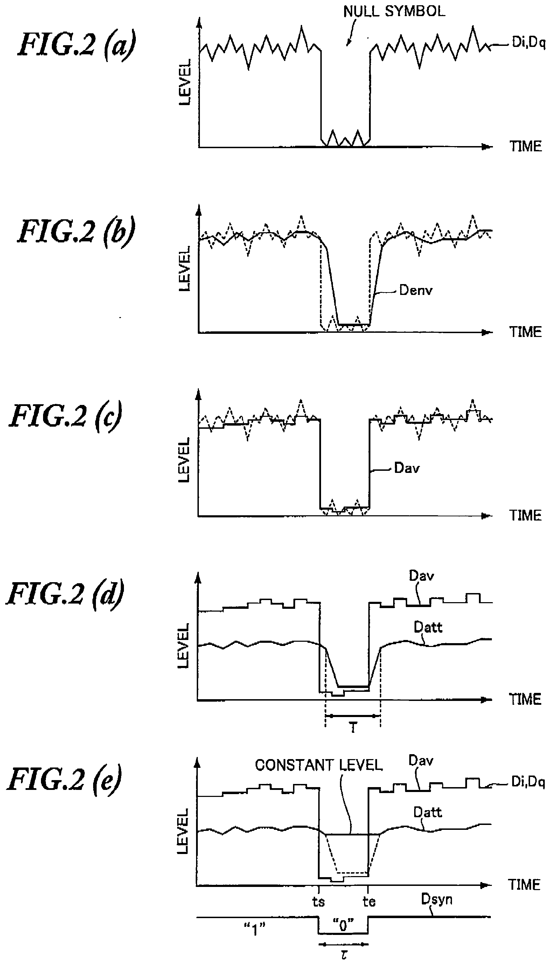

Next, description will be given to explain, as a preferred embodiment of the present invention, a digital broadcast receiver using OFDM method to receive digital audio broadcast of DAB system, with reference to Fig. 1 and Fig. 2. Fig. 1(a) is a block diagram showing the composition of a digital broadcast receiver of the present invention, Fig. 1(b) is a chart schematically showing a frame structure of a transmission signal transmitted from a broadcast station side. Fig. 2 provides waveform charts showing operations of a synchronism signal detecting section.

At first, description will be given to explain the composition of transmission signals of a baseband (baseband signals) to be broadcasted in DAB system. As described in relation to prior art, DAB system has prescribed four types of transmission modes "1" - "4" having different frame lengths and different null symbol lengths.

DAB transmission frame having a frame length set up by the respective transmission modes comprises: a synchronization channel consisting of a null symbol having a small transmission power and a phase reference symbol located subsequent to the null symbol; a fast information channel having various control information; a main service channel consisting of a plurality of transmission symbols and located subsequent to the fast information channel. Each transmission symbol has a guard interval and an effective symbol period.

Next, description will be given to explain the structure of the digital broadcast receiver 1 of the present embodiment, with reference to Fig. 1(a).

As shown, the digital broadcast receiver 1 comprises: a quadrature demodulator 2a which generates and outputs baseband signals I and Q by quadrature-detecting an intermediate frequency signal IF, a carrier wave reproducing unit 2b, an A/D converter 3, a data demodulator 4, as well as a synchronism signal detecting section 5 and a control unit 6.

Namely, the quadrature demodulator 2a quadrature-detects the intermediate frequency signal IF outputted from a front end (not shown), in accordance with a reproduced carrier wave signal reproduced by the carrier wave reproducing unit 2b and having a frequency equal to a carrier frequency fc, thereby frequency-converting the intermediate frequency signal IF into baseband signals I and Q having an in-phase component and a quadrature component. Then, the A/D converter 3 samples the baseband signals I and Q, and A/D-converts the same into digital data Di and Dq.

The data demodulator 4 applies a complex discrete Fourier transform (DFT processing) to the digital data Di and Dq to effect a decoding, thereby generating demodulation data and outputting the same to a decoder (not shown) which performs an error correction and a decoding or the like.

The synchronism signal detecting section 5 contains a low pass filter 5a, an average value computing unit 5b and a synchronism signal judging unit 5c, for detecting a null symbol having a small transmission power from the digital data Di and Dq supplied thereto, and supplying a synchronism detection signal Dsyn as a detection result to the control unit 6.

Here, the foregoing low pass filter 5a receives digital data Di, Dq and performs a digital low pass filtering, thereby envelop-detecting a level change (value change) of the digital data Di and Dq, and supplying the detected data series as envelope signal Denv to the synchronism signal judging unit 5c.

Moreover, the low pass filter 5a has a function of holding and outputting an envelope signal Denv during a period (hold period) lasting from a hold start to a hold release, all instructed by the synchronism signal judging unit 5c. Namely, upon receiving a hold start instruction from the synchronism signal judging unit 5c, the level of an envelope signal Denv will be held by (in synchronism with) the instruction, while a signal having a constant level held thereby is continuously outputted as an envelop signal Denv. Subsequently, upon receiving a hold release instruction, the hold action is terminated and the envelop detection is restarted, thereby outputting an envelope signal Denv corresponding to a level change of the digital data Di and Dq.

The average value computing unit 5b, while sampling and receiving a plurality of digital data Di and Dq in each predetermined time period, computes an average value of the sampled number of the digital data Di and Dq, and supplies a series of data which are the results of the computation as an average value signal Dav to the synchronism signal judging unit 5c. In the present embodiment, the reference sampling frequency fs of the A/D converter 3 is set at 2.048 MHz, while the average value computing unit 5b computes an average value each time the digital data Di and Dq are sample-inputted. Therefore, the average value computing unit 5b outputs an average value signal Dav in which the average value changes every 32 samples of time periods.

The synchronism signal judging unit 5c attenuates the envelope signal Denv with a predetermined attenuation factor (for example, 1/2), and compares each attenuated envelop signal Datt (hereinafter, referred to as "attenuated envelope signal") with the average value signal Dav. Afterwards, upon detecting a time point at which the average value signal Dav which had a higher level than the attenuated envelop signal Datt has changed to a lower level than the attenuated envelop signal Datt (as shown in the following equation (1)), the synchronism signal judging unit 5c will instruct the foregoing hold start (starting a hold period T), thereby allowing the low pass filter 5a to start its hold action. Subsequently, upon detecting a time point at which the average value signal Dav which had a lower level than the held and attenuated envelope signal Datt has changed to a higher level than the attenuated envelope signal Datt (as shown in the following equation (2)), the synchronism signal judging unit 5c will instruct the foregoing hold release (terminating the hold period T), thereby allowing the low pass filter 5a to again output an envelope signal Denv based on an envelop detection.

[Equation 1]

$$Dav < Datt \quad ... (1)$$

$$Dav > Dtt \quad ... (2)$$

Then, the synchronism signal judging unit 5c judges that a period during which the level of an average value signal Dav becomes lower than the attenuated envelop signal Datt is a null symbol period $\tau$, and outputs a synchronism detection signal Dsyn indicating the judged period $\tau$ to the control unit 6. For example, a synchronism detection signal Dsyn consisting of binary signal reversing from logic "1" to logic "0" only during the judged period $\tau$ is outputted to the control unit 6.

In this way, upon detecting a null symbol by virtue of the synchronism signal detecting section 5 comprising the low pass filter 5a, the average value computing unit 5b and a synchronism signal judging unit 5c, there will occur digital data Di and Dq of the baseband signals I and Q having a null symbol schematically shown in Fig. 2 (a). At this time, as shown in Fig. 2 (b), an envelope signal Denv of the null symbol envelop-detected by the low pass filter 5a will, due to a transmission characteristic of the low pass filter 5a having a sampling delay, become a waveform affected by a level change of the digital data Di and Dq previously inputted, resulting in a waveform which is later and blunter than an actual null symbol changing steeply.

On the other hand, as shown in Fig. 2(c), since an average value signal Dav of null symbol generated in the average value computing unit 5b is a data series of an average value of a plurality of samples, the signal Dav will become a concave waveform having no blunt portion, without being affected by a level change of the digital data Di and Dq previously inputted.

Then, when the synchronism signal judging unit 5c inputs the foregoing envelope signal Denv having a blunt waveform as an attenuated envelope signal Datt (refer to Fig. 2(d)), makes a comparison between the attenuated envelope signal Datt and the average signal Dav according to the condition of the above equation (1) and sets up a hold period T, the envelope signal Denv of the low pass filter 5a and the attenuated envelope signal Datt will be kept constant during the hold period T, as shown in Fig. 2(e).

As a result, when the synchronism signal judging unit 5c judges a null symbol period, a time point ts at which an average value signal Dav becomes smaller than an attenuated envelope signal Datt will be judged to be a start point of a null symbol period. Next, a time point te at which an average value signal Dav becomes larger than an attenuated envelope signal Datt kept at a constant level will be judged to be an end point of a null symbol period. In this way, a synchronism detection signal Dsyn will be generated and outputted which prescribes that a period te starting from the foregoing time point ts is a null symbol period $\tau$.

Namely, the synchronism signal judging unit 5c does not simply judges the level of the blunt envelope signal Denv shown in Fig. 2(b) to detect a null symbol period, but judges that a time point ts at which an average value signal Dav becomes smaller than the attenuated envelope signal Datt is a start point of a null symbol period $\tau$. Therefore, it is possible to highly accurately detect a start point of a null symbol period $\tau$. Furthermore, since a time point te at which an average value signal Dav becomes larger than an attenuated envelope signal Datt (namely, an attenuated envelop signal not affected by a blunt envelop signal Denv) kept at a constant level during a hold period T will be judged to be an end point of a null symbol period τ, it is possible to highly accurately detect an end point of a null symbol period τ. In this way, it is possible to extremely accurately detect a null symbol period as a synchronism detection signal Dsyn.

Next, the control unit 6 judges a transmission mode corresponding to a null symbol period τ indicated by a synchronism detection signal Dsyn, and identifies in accordance with a result of the foregoing judgment, the composition of DAB transmission frame, i.e., the positions of a phase reference symbol, a symbol of an FIC channel, a transmission symbol and the like which are all located after the foregoing null symbol, as well as the lengths of these symbols. Furthermore, a start point of demodulation data of a phase reference symbol outputted from the data demodulator 4 is detected in synchronism with the synchronism detection signal Dsyn, while CAZAC (Constant Amplitude Zero Auto correlation) sequence is extracted from the demodulation data of the phase reference symbol and then inputted. Subsequently, a cross-correlation computation is performed between an extracted CAZAC sequence and another CAZAC sequence serving as a phase reference symbol stored in advance in the control unit 6, thereby detecting a frequency error from a deviation amount of peak position of a correlation coefficient.

Namely, since CAZAC sequence is a self-quadrature sequence in which the result of a auto-correlation becomes zero, the control unit 6 will perform a cross-correlation computation between the extracted CAZAC sequence and another CAZAC sequence stored in advance, thereby detecting as a frequency error a deviation amount of peak position of a correlation coefficient.

Furthermore, the control unit 6 detects a start point of demodulation data of a phase reference symbol outputted from the data demodulator 4 in synchronism with the synchronism detection signal Dsyn, while a cross-correlation computation is carried out between the demodulation data of the phase reference symbol (i.e., data which has been frequency shifted only by a detected frequency error) and another phase reference symbol stored in advance, thereby calculating a CIR (Channel Impulse Response) indicating a response of a propagation way, and detecting a time error from a positional deviation amount of an impulse of the calculated CIR data. Meanwhile, it is judged whether or not there is a peak of an impulse and an initial synchronization will be judged to be successful if it is judged that there is a peak of the impulse.

Furthermore, upon judging that an initial synchronization is successful, the control unit 6 will, in accordance with an amount of movement corresponding to 100% of the above time error, adjust a sampling start time at which the data demodulator 4 samples digital data Di and Dq, and data-demodulates the transmission symbol.

Namely, when a time error is 0, the position of impulse in CIR data will become coincident with the start and end positions corresponding to the effective symbol period of each transmission symbol, while a time range from a sampling start time to a sampling end time (hereinafter, referred to as "FFT window") at a time the data demodulator 4 performs the above-mentioned data demodulation, will become coincident with the effective symbol period. On the other hand, when a time error is not 0, the position of impulse in CIR data will deviate from the start and end positions corresponding to the effective symbol period of each transmission symbol, and "FFT window" will thus deviate from the effective symbol period.

Then, the control unit 6 will adjust the position of FFT window by about a moving amount corresponding to 100% of a time error, so as to perform a correction to effect an appropriate data demodulation on an effective symbol of an effective symbol period, without performing data demodulation on the transmission symbols poisoned before and after the foregoing position. In this way, it is possible to prevent a demodulation performance deterioration possibly caused due to an interference between symbols.

Further, the control unit 6, after correcting the position of FFT window, employs the foregoing CAZAC sequence to supply a frequency fine adjustment signal Scnt indicating a calculated frequency error to a local oscillator (not shown) of the front end, thereby finely adjusting a current turning frequency by a frequency amount corresponding to 100% of a frequency error, thus completing the initial synchronization. In this way, the frequency converter within the frond end performs a frequency conversion on the RF reception signal outputted from a reception antenna (not shown) using a correct turning frequency, thereby making it possible to improve the precisions of the detection and data demodulation in the quadrature demodulator 2 and the data demodulator 4.

After completing the initial synchronization, the digital broadcast receiver 1 continues its reception operation.

As described above, using the digital broadcast receiver 1 of the present embodiment, it is possible to correctly detect null symbols using the synchronism signal detecting section 5.

Furthermore, since it is possible to correctly detect null symbols by the synchronism signal detecting section 5, it is possible to correctly detect the position of a phase reference symbol in accordance with a result of the foregoing detection, thereby making it possible to complete, within a shortened time period, an initial synchronization processing for correcting a frequency error and a time error.

Namely, in a prior art which fails to correctly detect null symbol periods without performing many times of null symbol detections, since a considerably long time is needed in performing a processing for correcting a frequency error and a time error, it is impossible to complete the foregoing initial synchronization processing. Different from the conventional technique, since the digital broadcast receiver 1 of the present embodiment can correctly detect a symbol period $\tau$ by performing a null symbol detection only once, it is possible to correct a frequency error and a time error and thus complete the foregoing initial synchronization within a shortened time period.

In a generally known conventional digital broadcast receiver, during an initial synchronization, upon detecting a frequency error and a time error from a phase reference symbol, the position of an FFT window and a tuning frequency are finely adjusted by about 50% of a frequency error and a time error. Subsequently, the same process is repeated in which a frequency error and a time error are detected, and the position of an FFT window and a tuning frequency are finely adjusted by about 50% of a frequency error and a time error, thereby gradually making the position of an FFT window and a tuning frequency close to appropriate states. As a result, a time needed in the initial synchronization will become undesirably long. Different from the foregoing conventional digital broadcast receiver, the digital broadcast receiver 1 of the present embodiment makes it possible to correctly detect null symbol periods through only one null symbol detection during an initial synchronization, it is possible to correctly approach so-called tuning point only by adjusting the position of an FFT window and a tuning frequency by 100% of a frequency error and a time error detected from a phase reference symbol.

For this reason, the digital broadcast receiver 1 of the present embodiment makes it possible to complete an initial synchronization within a shortened time period, without having to repeatedly detect null symbols and frequency error, as required in the above-described conventional digital broadcast receiver.

In an arrangement shown in Fig. 1(a), analog baseband signals I and Q outputted from quadrature demodulator 2a are A/D-converted into digital data Di and Dq by the A/D converter 3. On the other hand, it is also possible to form an arrangement in which IF signal is A/D-converted and supplied to the quadrature demodulator 2a, while the quadrature demodulator 2a and the carrier wave reproducing unit 2b are formed of digital circuits which perform quadrature detection and reproduce carrier wave by virtue of digital signal, thereby omitting the A/D converter 3.

According to the above-described arrangement, since the digital data equivalent to an IF signal will be supplied to the quadrature demodulator 2a consisting of a digital circuit, the quadrature demodulator 2a can perform a quadrature detection. Therefore, it is possible to generate the digital data Di and Dq equivalent to the baseband signals and supply the same to the data demodulator 4 and the synchronism signal detecting section 5, thereby making it possible to exhibit the same effect and the same advantage as the circuit arrangement shown in Fig. 1(a). Further, it is also possible to realize an improved digitalization for digital broadcast receiver.

Moreover, when the quadrature demodulator 2a and the carrier wave reproducing unit 2b are formed of digital circuits and the A/D converter which supplies the digital data equivalent to IF signal to the quadrature demodulator 2a is provided before the quadrature demodulator 2a, it is possible to form an arrangement in which the digital data equivalent to the IF signal, rather than digital data Di and Dq, is supplied to the synchronism signal detecting section 5 to detect a null symbol period $\tau$. Namely, since a null symbol is a signal component not modulated, even if the synchronism signal detecting section 5 performs a null symbol detection taking digital data equivalent to an IF signal as a processing object, it is still possible to perform the same processing as described with reference to Figs. 2(a) to 2(e), thereby rendering it possible to highly accurately detect a null symbol period t in accordance with the digital data equivalent to an IF signal.

Although the above description has been given to explain an embodiment of the digital broadcast receiver which receives a digital audio broadcast of DAB system, it is also possible for the digital broadcast receiver 1 of the present embodiment to properly perform an initial synchronization based on a transmission signal (baseband signal) in other broadcast system having the same frame structure as shown in Fig. 1(b).

Moreover, it is also possible to employ a so-called hardware to form the synchronism signal detecting section 5 and the control unit 6, or to use a computer program to form the foregoing synchronism signal detecting section 5 and the control unit 6, thereby forming a so-called software capable of executing the computer program using a DSP (Digital Signal Processor) and an MPU (microprocessor).

[Embodiment 1]

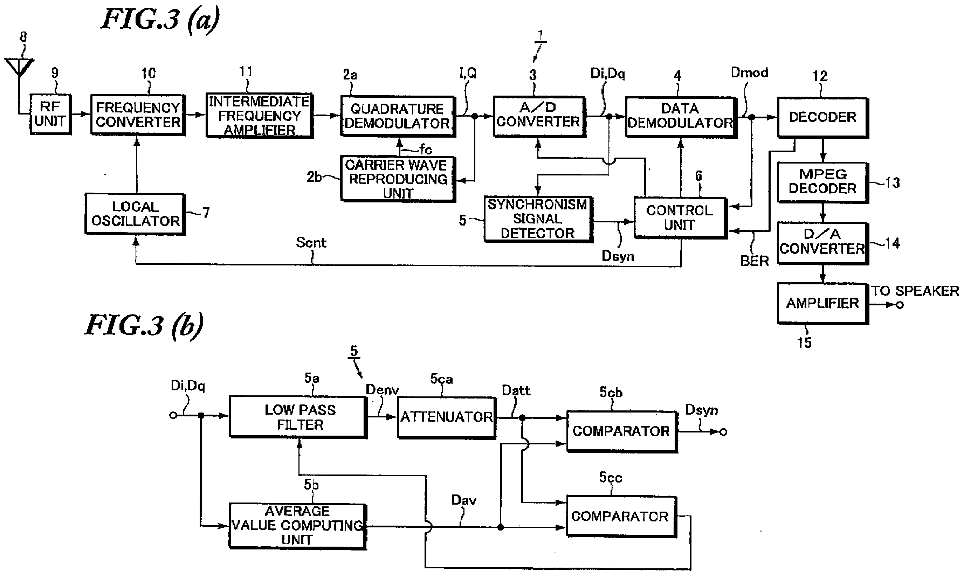

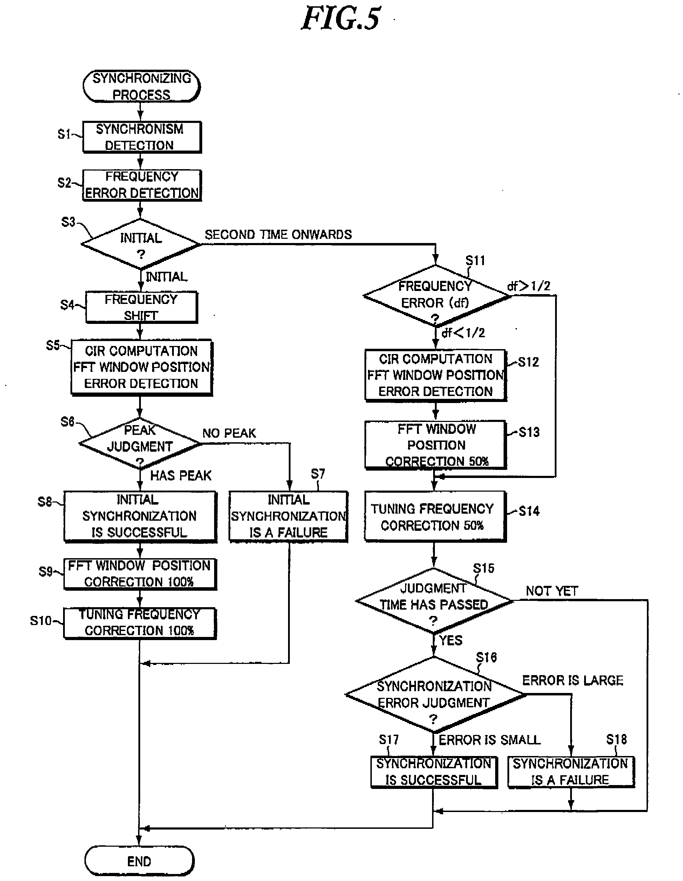

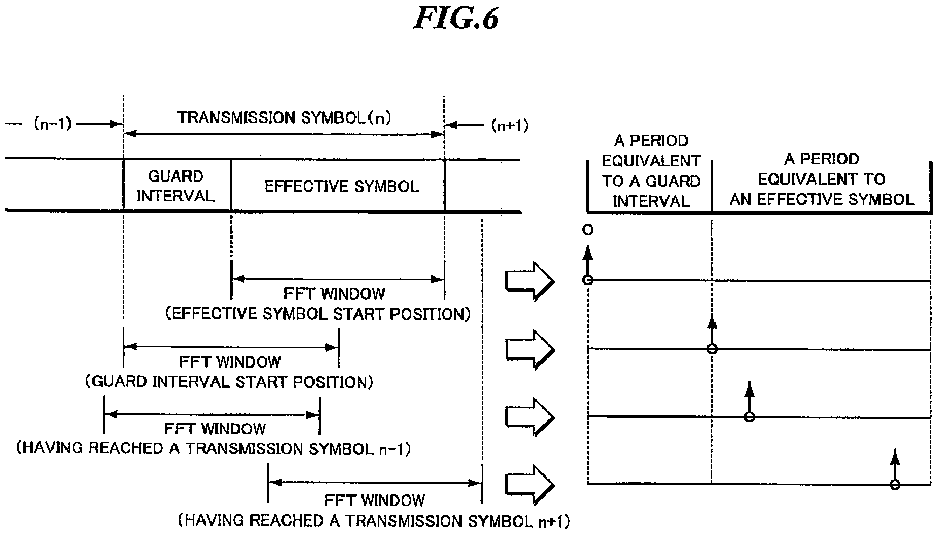

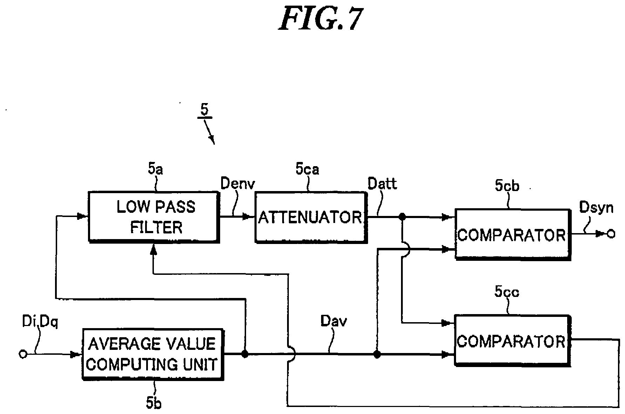

In the following, description will be given to explain a more detailed embodiment of the present invention with reference to Figs. 3 to 7. Fig. 3 is a block diagram showing the composition of a digital broadcast receiver of the present embodiment, using the same reference numerals to represent the elements which are the same as or corresponding to those in Fig. 1(a). Fig. 5 is a flow chart showing an operation of the digital broadcast receiver of the present embodiment. Fig. 6 is a chart showing a time error correction principle. Fig. 7 is a block diagram showing the composition of a modified synchronism signal detecting section.

As shown in Fig. 3, the digital broadcast receiver 1 of the present embodiment comprises: an RF unit 9 which amplifies and outputs an RF reception signal received by a reception antenna 8; a frequency converter 10 which generates an IF signal having an intermediate frequency by mixing the RF reception signal with a local oscillation signal fed from a local oscillator 7; an intermediate frequency amplifying unit 11 which limits the frequency of the IF signal to a predetermined frequency and outputs the IF signal; a quadrature demodulator 2a which generates baseband signals I and Q by quadrature-detecting the IF signal fed from the intermediate frequency amplifying unit 11 in accordance with a reproduced carrier signal having a carrier frequency fc; a carrier wave reproducing unit 2b which reproduces a reproduced carrier signal having the carrier frequency fc from the baseband signals I and Q and supplies the signal to the quadrature demodulator 2a; an A/D converter 3 which A/D-converts the baseband signals I and Q into digital data Di and Dq; a data demodulator 4; a synchronism signal detecting section 5; and a control unit 6. The digital broadcast receiver 1 further comprises: a decoder 12 which performs an error correction and a decoding on the demodulation data Dmod which is an output of the data demodulator 4; an MPEG decoder 13 which decodes the decoded data outputted from the decoder 12 into audio data; a D/A converter 14 which D/A-converts the foregoing audio data into an analog audio signal; and an amplifier 15 which power-amplifies the foregoing audio signal and supplies the same to a speaker (not shown) or the like.

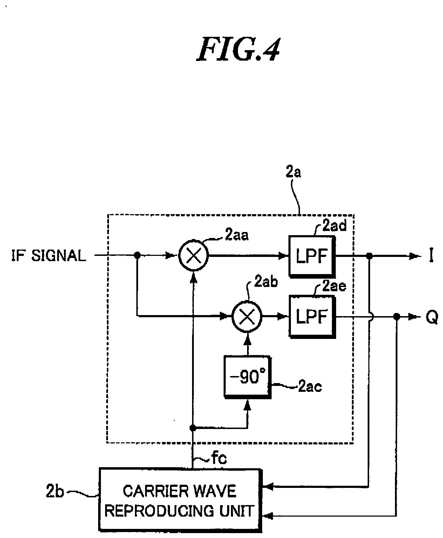

Here, the quadrature demodulator 2a which performs a quadrature detection serves as a typical example of performing a quadrature detection on a modulation wave such as ASK, PSK, and APSK or the like, as shown in Fig. 4. A multiplier 2aa multiplies the reproduced carrier signal having a carrier frequency fc reproduced by the carrier reproduction unit 2b with an IF signal, and passes the multiplied signal through a low pass filter having a predetermined frequency band, thereby outputting baseband signals having the same components. Meanwhile, the multiplier 2ab multiplies the reproduced carrier signal supplied hereto through -90° phase shifter 2ac with the IF signal, and passes the multiplied signal through the low pass filter 2ac having a predetermined frequency band, thereby outputting a baseband signal Q containing a quadrature component.

As shown in the block diagram of Fig. 3(b), the synchronism signal detecting section 5 has a low pass filter 5a and an average value computing unit 5b shown in Fig. 1(a), an attenuator 5ca forming the synchronism signal judging unit 5c, as well as comparators 5ca and 5cc.

The low pass filter 5a is formed of a digital filter such as an IIR type digital filter or the like, and performs an envelope detection by digital filtering the digital data Di and Dq, thereby outputting an envelope signal Denv. Further, by temporarily stopping the operation of the digital filtering during a hold period T in accordance with an output of the comparator 5cc, it is possible to keep a level envelop-detected right before the hold period T, thereby outputting a constant level kept during the hold period T as an envelope signal Denv, as shown in Figs. 2(d), 2(e).

The average value computing unit 5b has a data buffer which buffers the digital data Di and Dq of a predetermined number of samples, and a computing circuit which calculates an average value of the digital data Di and Dq accumulated in the data buffer, thereby outputting an average value signal Dav and repeating the processing whenever an average value of a predetermined number of samples is computed. In the present embodiment, the reference sampling frequency fs of the A/D converter 3 is set at 2.048 MHz, while the average value computing unit 5b computes an average value whenever 32 samples of digital data Di and Dq are inputted.

Attenuator 5ca attenuates the envelope signal Denv with one half of an attenuation factor (namely, -6dB), thereby outputting an attenuated signal as an attenuated envelope signal Datt. Therefore, when the digital data Di and Dq of the baseband signals I and Q illustrated in Fig. 2 (a) are envelope-detected in the low pass filter 5a, and when the envelope signal Denv illustrated in Fig. 2(b) is supplied, the attenuator 5ca will output an attenuated envelope signal Datt totally attenuated but having a constant level during the hold period T, as shown in Figs. 2(d) and 2(e).

The comparator 5cc is formed of a digital comparator which compares the level of the attenuated envelope signal Datt with that of the average value signal Dav. Upon detecting a time point at which an average value signal Dav larger than an attenuated envelope signal Datt has become lower than the attenuated envelope signal Datt, an instruction for starting a hold operation is fed to the low pass filter 5a. Afterwards, upon detecting a time point at which an average value signal Dav lower than an attenuated envelope signal Datt held at a constant level has become larger than the attenuated envelope signal Datt, an instruction for releasing the hold action is fed to the low pass filter 5a, thereby setting the foregoing hold period T.

The comparator 5cb is formed of a digital comparator which compares the level of an attenuated envelope signal Datt with that of an average value signal Dav, and detects that a period during which the level of an average value signal Dav has become lower than an attenuated envelope signal Datt is a null symbol period τ, thereby outputting to the control unit 6 a synchronism detection signal Dsyn consisting of a binary signal or the like which reverses from logic "1" to logic "0" only during the detected period τ.

The control unit 6 is formed of a digital signal processor (DSP), a microprocessor (MPU) or a digital circuit having a hardware structure, has not only a function of performing an initial synchronization described in the foregoing embodiment, but also a function of performing a synchronism control after the foregoing initial synchronization.

Next, description will be given to explain an operation of the digital broadcast receiver 1 having the above-described configuration, with reference to Fig. 5 and Fig. 6.

As shown in Fig. 5, when a user or the like has issued an instruction for performing a switchover to a desired broadcast channel or an instruction for starting a seek or a search for automatically searching for a broadcast channel having an acceptable reception condition, an instruction indicating that an initial synchronization is necessary will soon start a synchronization processing.

At step S1, the synchronism signal detecting section 5 performs a synchronism detection processing for judging a null symbol period $\tau$.

Once a null symbol period $\tau$ is judged, the control unit 6 will at step S2 judge a transmission mode in accordance with a null symbol period $\tau$ indicated by a synchronism detection signal Dsyn, extract a phase reference symbol outputted from the data demodulator 4 in accordance with a result of the judgment and output the same, and perform a cross-correlation computation between the CAZAC sequence within the extracted phase reference symbol and a stored CAZAC sequence, thereby detecting a frequency error.

Next, the control unit 6 will at step S3 judge whether the frequency error detection performed at step S2 is a first time (an initial time) from the start of a synchronization processing. If so, the process will proceed to step S4.

Next, the control unit 6 will at step S4 shift the frequency of the demodulation data of the phase reference symbol outputted from the data demodulator 4 in accordance with a frequency error of a first time. Subsequently, at step S5, a cross-correlation computation is performed between the demodulation data of the frequency-shifted phase reference symbol and the data of the stored phase reference symbol, thereby calculating a channel impulse response (CIR) showing a response of a propagation way. Then, a time error is detected from a positional deviation amount of an impulse of the calculated CIR data, so as to detect a positional deviation (error) of an FFT window with respect to an effective symbol period.

Next, at step S6, the control unit 6 judges whether there is a peak of an impulse in CIR data. If yes, the process will proceed to step S8, and an initial synchronization is thus judged to have been successful. On the other hand, if the control unit 6 judges that there is not such a peak of an impulse in CIR data, the process will proceed to step S7, and an initial synchronization is thus judged to be a failure. After the synchronizations which have been going on have been terminated, the process will return back to step S1 and restart the synchronization (restart as an initial synchronization).

At step S8, upon judging that an initial synchronization has been successful, the control unit 6 will proceed to step S9 and adjust the position of an FFT window by a moving amount equivalent to 100% of a time error detected at the foregoing step S5, thereby effecting a correction to prevent a deteriorated demodulation performance possibly caused due to an inter-symbol interference.

Namely, as shown in Fig. 6, when a start position of an effective symbol of a certain transmission symbol (n) is coincident with a start position of an FFT window, a positional deviation amount (time error) of an impulse in CIR data will become zero. Further, when a start position of a guard interval of a transmission symbol (n) is coincident with a start position of an FFt window, the position of an impulse in CIR data will become coincident with a start position of a period corresponding to an effective symbol. Moreover, when an FFT window has touched a front transmission symbol (n-1) or a rear transmission symbol (n+1), the position of an impulse in CIR data will depart from a period corresponding to a guard interval.

Then, the control unit 6 adjusts the position of an FFT window in accordance with 100% of a time error, so as to effect an adjustment to carry out an appropriate data demodulation on each effective symbol, without taking transmission symbols located before and after as objects for data demodulation.

Next, at step S10, the control unit 6 supplies a frequency fine adjustment signal Scnt indicating a frequency error already calculated at Step S2 to a local oscillator 7 on the front end side, and performs a fine adjustment on a current tuning frequency of the local oscillation signal by a frequency amount equivalent to 100% of a frequency error, thereby completing an initial synchronization. In this way, the frequency converter 10 can perform a frequency conversion on RF reception signal using a correct tuning frequency, thereby improving the precisions of detection and data demodulation in the quadrature demodulator 2 and the data demodulator 4.

Next, description will be given to explain an operation of a synchronous reception for maintaining an acceptable reception state after an initial synchronization is completed.

Namely, upon completing an initial synchronization, synchronizations from the second time onwards are repeated from step S1, thereby performing a synchronism detection at step S1 in order to judge a null symbol period $\tau$. Meanwhile, at step S2, a frequency error is detected using the CAZAC sequence.

Next, at step S3, the control unit 6 judges that a frequency error detection is a detection based on a synchronization from a second time onwards (not an initial synchronization) and the process proceeds to step S11.

At Step S11, the control unit 6 judges whether a frequency error (df) from a second time onwards is larger than a frequency equivalent to 1/2 of a frequency resolution of the Fourier transform (DFT). If not, the control unit 6 will perform operations of steps S12, S13 and the process will proceed to step S14. If yes, the process will directly proceed to step S14.

At step S12, the control unit 6 extracts a phase reference symbol from the demodulation data Dmod of the data demodulator 4, and performs a cross-correlation computation between the phase reference symbol and another phase reference symbol data stored in advance, so as to calculate CIR, thereby detecting a positional deviation (time error) of an FFT window from a positional deviation of a peak in the CIR data.

Next, at step S13, the control unit 6 causes the data demodulator 4 to adjust the position of an FFT window in accordance with a moving amount equivalent to 50% of a time error calculated at step S12, thereby effecting a correction to make the FFT window to be corresponding to an effective symbol.

Next, at step 14, the control unit 6 supplies, to the local oscillator 7 on the front end side, a frequency fine adjustment signal Scnt indicating an error frequency equivalent to 50% of the foregoing frequency error (df), and performs a fine adjustment on a current tuning frequency of a local oscillation signal by an amount of the error frequency, thereby effecting a partial correction of the frequency error (df).

Next, at step S15, the control unit 6 judges whether a predetermined synchronism judging time has passed. If not, the process returns to step S1 and thus repeats the foregoing processing. Namely, in the digital broadcast receiver 1 of the present embodiment, during a continued reception after an initial synchronization has been completed, operations starting with step S1 are repeated several times within a predetermined synchronism judging period, so that it is possible to make the position of an FFT window and a tuning frequency to gradually reach appropriate states at steps S13 and S14.

Then, once a synchronism judging time has passed, the control unit 6 will judge such a "pass" at step S15 and the process will proceed to step S16.

At step S16, the control unit 6 inputs the bit error rate (BER) detected when the decoder 12 is correcting an error of demodulation data Dmod and decoding the same, thereby judging a synchronization error in accordance with a value of a bit error rate. If the value of a bit error rate or the like is within a range capable of obtaining an acceptable reception state, i.e., if a synchronization error is small, the process will proceed to step S17 and judge that a synchronous reception has been successful, thereby repeating the operations starting with step S1. On the other hand, if the value of a bit error rate or the like is not within a range capable of obtaining an acceptable reception state, i.e., if a synchronization error is large, the process will proceed to step S18 and judge that a synchronous reception has been a failure, thereby resetting the contents of the synchronization which has been going on up till now. Subsequently, operations starting with step S1 are repeated so as to newly start an initial synchronization (an initial synchronization processing).

Then, once the digital broadcast receiver 1 judges at step 17 that a synchronization has been successful, a normal reception will be continued in which a decoding and a decoding processing will be performed by virtue of the decoder 12 and the MPEG decoder 13 or the like.

As described above, using the digital broadcast receiver 1 of the present embodiment, it is possible to correctly detect null symbols by virtue of the synchronism signal detecting section 5.

Furthermore, since it is possible to correctly detect null symbols by virtue of the synchronism signal detecting section 5, it is possible to correctly detect the position of a phase reference symbol in accordance with the foregoing detection result, without having to detect null symbols of several times. Therefore, itbecomes possible to complete in a shortened time period an initial synchronization for correcting a frequency error and a time error.

Furthermore, when an initial synchronization is being carried out, since it is possible to correctly detect null symbol periods through only one null symbol detection, it is possible for the position of an FFT window and a tuning frequency to be close to a so-called tuning point, only by adjusting the position of the FFT window and the tuning frequency using 100% of a time error and a frequency error detected from a phase reference symbol. In this way, it is possible to complete an initial synchronization in a shortened time period and continue a normal reception.

Furthermore, when an initial synchronization has been completed and another synchronization is then performed for carrying out a normal reception, if a synchronous reception has been a failure at step S18, an initial synchronization will be newly performed. At this time, since it is possible to shorten a time period necessary for an initial synchronization as described above, it becomes possible to shorten a time before a reception is again restored to a normal reception.

With regard to a synchronism signal detecting section 5 shown in Fig. 3(b), digital data Di and Dq of baseband signals I and Q are supplied to both of the low pass filter 5a and the average value computing unit 5b. However, it is also possible to form an arrangement shown in Fig. 7 in which the digital data Di and Dq are supplied to the average value computing unit 5b to calculate an average value, while an obtained average value signal Dav is supplied to the low pass filter 5a, thereby effecting an envelop detection.

If the synchronism detecting section 5 is formed to have a configuration shown in Fig. 7, since an average value computing unit 5b can reduce a high frequency noise component through an average value computation, it is possible to reduce an index of the low pass filter 5a, thereby obtaining an advantage of forming a low pass filter 5a in a simplified structure.

Moreover, although the above description of the present embodiment shows that the position of an FFT window and a tuning frequency are corrected in steps S9 and S10 of Fig. 5, any one of such two actions can be omitted according to a design specification or the like.

Moreover, the attenuation factor of the attenuator 5ca shown in Fig. 3(b) does not necessarily need to be 1/2 (namely, -6 dB). In fact, such an attenuation factor can be properly decided as long as the decided attenuation factor can make the attenuation envelope signal Datt deviate from the level of an average signal Dav.

Further, although the above description has been given to explain an example in which the average value computing unit 5b performs an average value computation for every 32 samples, it is also possible to properly set the number of samples according to a relation between an average value and a sampling frequency of the A/D converter 3 or a frequency characteristic of a low pass filter 5a.

Moreover, according to the arrangement shown in Fig. 3(a), IF signal is frequency converted into baseband signals I and Q by virtue of a quadrature demodulator 2a consisting of an analog circuit. The baseband signals I and Q are then A/D-converted by the A/D converter 3 into digital data Di and Dq, thereby allowing the data demodulator 4 and the synchronism signal detecting section 5 to perform digital signal processing. However, this should not form any limitation to the present invention. In fact, it is also possible to provide an A/D converter which A/D-converts the IF signal and supplies the same to the quadrature demodulator 2a, between the intermediate frequency amplifier 11 and the quadrature demodulator 2a, use digital circuitry to form the quadrature demodulator 2a and the carrier wave reproducing unit 2b, omit the A/D converter 3, directly supply an output of the quadrature demodulator 2a to the data demodulator 4 and the synchronism signal detecting section 5. According to the foregoing arrangement, since the quadrature demodulator 2a consisting of a digital circuit may perform a quadrature detection through digital signal processing, the digital data Di and Dq equivalent to the baseband signals will be outputted from the quadrature demodulator 2a and supplied to the data demodulator 4 and the synchronism signal detecting section 5. In this way, it is possible to exhibit the same function as an arrangement shown in Fig. 3 (a), thereby providing a further digitalized digital broadcast receiver.

[Embodiment 2]

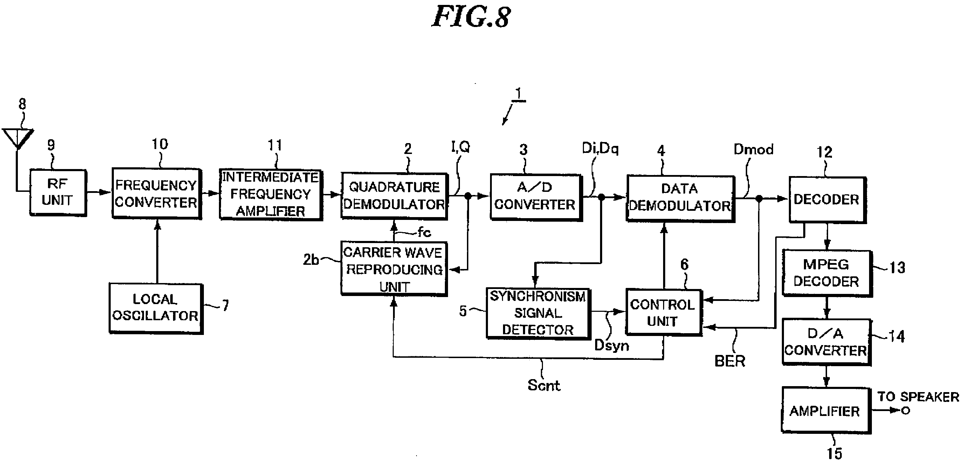

Next, description will be given to explain another example equivalent to a modified example of the digital broadcast receiver shown in Fig. 3(a), with reference to Fig. 8. Fig. 8 is a block diagram showing the composition of a digital broadcast receiver of the present embodiment, using the same reference numerals to represent the elements which are the same as or corresponding to those shown in Fig. 3(a).

Next, description will be given to explain a structural difference between the digital broadcast receiver 1 of the present embodiment shown in Fig. 8 and the digital broadcast receiver shown in Fig. 3(a). Namely, as mentioned above, the digital broadcast receiver shown in Fig. 3(a) is so formed that the control unit 6 controls the local oscillator 7 and performs a fine adjustment on a tuning frequency of the local oscillation signal, in accordance with a frequency fine adjustment signal Scnt which indicates a frequency error calculated by performing a cross-correlation computation between the CAZAC sequence extracted from the demodulation data Dmod and another CAZAC sequence stored in advance. Further, the frequency converter 10 frequency-converts RF signal into IF signal in accordance with a finely adjusted local oscillation signal.

On the other hand, the digital broadcast receiver 1 of the present embodiment shown in Fig. 8, instead of controlling the local oscillator 7 in accordance with the frequency fine adjustment signal Scnt, supplies the frequency fine adjustment signal Scnt to the carrier wave reproducing unit 2b, thereby effecting a fine adjustment on the frequency fc of a reproduced carrier signal. At this time, the quadrature demodulator 2a frequency-converts IF signal into baseband signals I and Q in accordance with the finely adjusted reproduced carrier signal, while other portions are just the same as the digital broadcast receiver shown in Fig. 3(a).

Namely, at step S10 the digital broadcast receiver 1 of the present embodiment will, at a time of performing an initial synchronization as described with reference to the flow chart shown in Fig. 5, supply a frequency fine adjustment signal Scnt from the control unit 6 to the carrier wave reproducing unit 2b, thereby performing a fine adjustment on the frequency fc of a reproduced carrier signal by a frequency amount equivalent to 100% of a frequency error. Then, at step S40 at a time of performing synchronizations from a second time onwards (as shown in Fig. 5), the digital broadcast receiver 1 supplies a frequency fine adjustment signal Scnt from the control unit 6 to the carrier wave reproducing unit 2b, thereby performing a fine adjustment on the frequency fc of a reproduced carrier signal by a frequency amount equivalent to 50% of a frequency error.

The digital broadcast receiver 1 of the present embodiment having the above-described composition is so fabricated that it can apply a fine adjustment to the carrier wave reproducing unit 2b in accordance with an instruction based on the frequency fine adjustment signal Scnt. In this way, it is possible to obtain an advantage of making a tuning frequency close to a so-called tuning point by applying a fine adjustment to a tuning frequency set in the local oscillator through a tuning operation or the like performed by a user or the like in accordance with an instruction based on the frequency fine adjustment signal Scnt, there by making it possible to improve a precision of data demodulation or the like of the data demodulator 4.

[Embodiment 3]

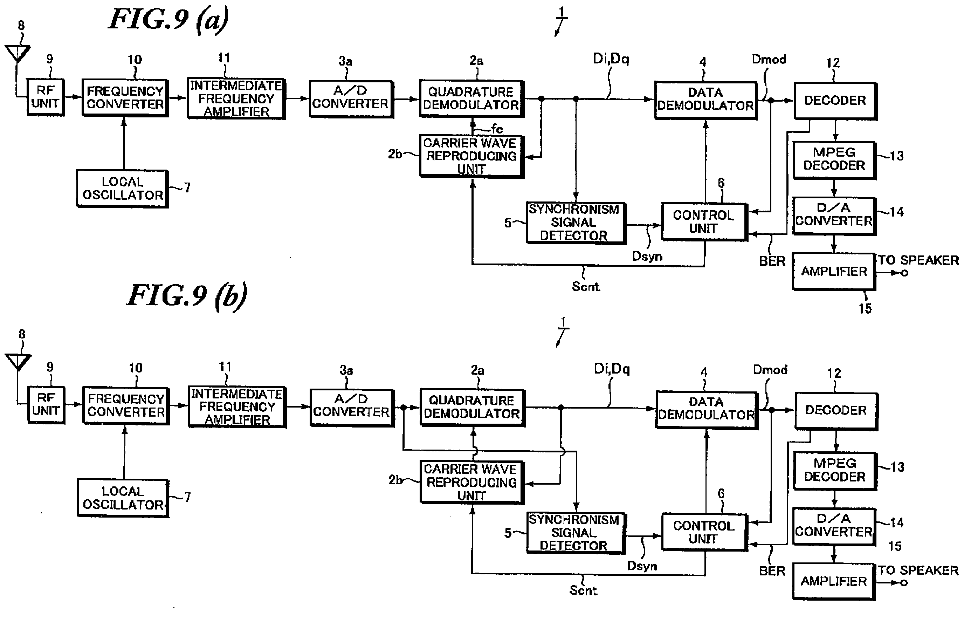

Next, description will be given to explain an embodiment equivalent to a further modified embodiment of the digital broadcast receiver shown in Fig. 8, with reference to Fig. 9. Figs. 9(a) and 9(b) are block diagrams showing the compositions of two types of digital broadcast receivers according to the present embodiment, using the same reference numerals to represent elements which are the same as or corresponding to those shown in Fig. 8.

At first, the digital broadcast receiver 1 shown in Fig. 9 (a) is so fabricated that it includes an A/D converter 3a provided between the intermediate frequency amplifying unit 11 and the quadrature demodulator 2a, but dispenses with the A/D converter 3 shown in Fig. 8. Specifically, the quadrature demodulator 2a and the carrier wave reproducing unit 2b are formed of digital circuitry which performs a quadrature conversion and reproduces a carrier wave.

Using the foregoing arrangement, it is possible for the A/D converter 3a to A/D-convert the IF signal outputted from the intermediate frequency amplifying unit 11 and supply the same to the quadrature demodulator 2a consisting of a digital circuit, and it is also possible for the carrier wave reproducing unit 2b consisting of digital circuitry to apply a fine adjustment to the frequency fc of a reproduced carry signal and supply the same to the quadrature demodulator 2a, in accordance with an instruction based on a frequency fine adjustment signal Scnt indicating a frequency error supplied from the control unit 6. In this way, the quadrature demodulator 2a can quadrature-detect digital data equivalent to IF signal by virtue of digital signal processing based on a reproduced carrier wave signal, output the digital data Di and Dq equivalent to the baseband signals, and supplie the same to the data demodulator 4 and the synchronism signal detecting section 5.

In this way, when the digital broadcast receiver 1 is fabricated as having a structure shown in Fig. 9(a), it is possible to supply the digital data Di and Dq equivalent to baseband signals to the data demodulator 4 and the synchronism signal detecting section 5, thereby making it possible to exhibit the same functions as the digital broadcast receiver shown in Fig. 8. Moreover, it is also possible to realize a further digitalization for a digital broadcast receiver.

In fact, the digital broadcast receiver 1 shown in Fig. 9(b) is so fabricated that it includes an A/D converter 3a provided between the intermediate frequency amplifying unit 11 and the quadrature demodulator 2a, but dispenses with the A/D converter 3 shown in Fig. 8. Specifically, the quadrature demodulator 2a and the carrier wave reproducing unit 2b are formed of digital circuitry which performs a quadrature conversion and reproduces a carrier wave. Furthermore, rather than the digital data Di and Dq equivalent to baseband signals, the digital data Dif equivalent to the IF signal A/D-converted by the A/D-converter 3a is supplied to the synchronism signal detecting section 5.

According to the above-described constitution, the synchronism signal detecting section 5 performs a processing for detecting a null symbol period $\tau$ with respect to the digital data Dif equivalent to IF signal. However, since null symbol is a signal component which has not been processed in a modulation or the like, the foregoing processing will be the same as that described with reference to Figs. 2(a) to 2(e). For this reason, even if the digital data Dif equivalent to IF signal is taken as an object for null symbol detection, it is still possible to highly accurately detect the null symbol period $\tau$.

[Embodiment 4]

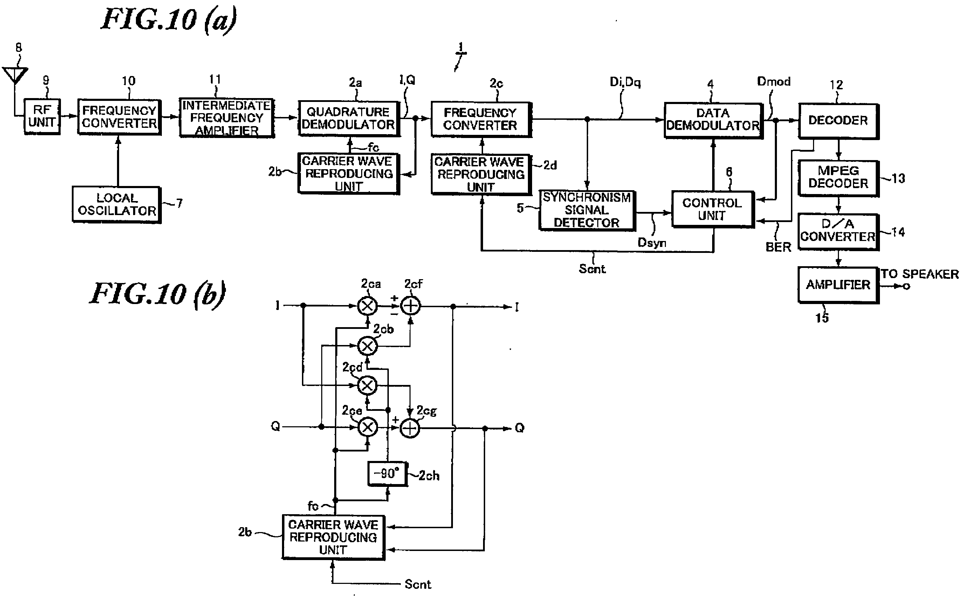

Next, description will be given to explain an embodiment equivalent to a further modified embodiment of the digital broadcast receiver shown in Fig. 8, with reference to Fig. 10. Fig. 10(a) is a block diagram showing the composition of the digital broadcast receivers 1 according to the present embodiment, using the same reference numerals to represent elements which are the same as or corresponding to those in Fig. 8. Fig. 10(b) is a block diagram showing the composition of a frequency converter subordinately connected to a rear stage of a quadrature demodulator.

Next, description will be given to explain a structural difference between the digital broadcast receiver 1 of the present embodiment shown in Fig. 10(a) and the digital broadcast receiver shown in Fig. 8. Namely, as mentioned above, the digital broadcast receiver shown in Fig. 8 is so formed that the control unit 6 supplies the frequency fine adjustment signal Scnt to the carrier wave reproducing unit 2b which generates a reproduced carrier signal for the quadrature demodulator 2a to perform a quadrature detection, thereby applying a fine adjustment to the frequency fc of a reproduced carrier signal.

On the other hand, the digital broadcast receiver 1 shown in Fig. 10(a) is so formed that it does not control the carrier wave reproducing unit 2b by virtue of the frequency fine adjustment signal Scnt, but includes a frequency converter 2c connected at the rear stage of the quadrature demodulator 2a, as well as a carrier wave reproducing unit 2d which generates a reproduced carrier signal to be supplied to the frequency converter 2c, thereby controlling the carrier wave reproducing unit 2d by virtue of the frequency fine adjustment signal Scnt.

Here, the quadrature demodulator 2a has a composition illustrated in Fig. 4, while the frequency converter 2c has a composition illustrated in Fig. 10(b).

Namely, the frequency converter 2c comprises, as shown in Fig. 10(b), multipliers 2ca, 2cc, 2cd, 2ce, a subtractor 2cf, an adder 2cg, and -90° phase-shifter 2ch, and operates in accordance with (i) a reproduced carrier wave signal finely adjusted by the carrier wave reproducing unit 2d according to a frequency fine adjustment signal Scnt indicating a frequency error, and (ii) a reproduced carrier wave signal phase-shifted by the -90° phase-shifter 2ch, so as to frequency-convert the baseband signals I and Q fed from the quadrature demodulator 2a and output the frequency-converted baseband signals I and Q towards the A/D converter 3.

Using the digital broadcast receiver 1 of the present embodiment having the above-described structure, a fundamental processing for quadrature-converting IF signal to baseband signals I and Q is performed by virtue of the quadrature demodulator 2a and the carrier wave reproducing unit 2b. Then, the quadrature demodulator 2a and the carrier wave reproducing unit 2b perform a frequency conversion on the baseband signals I and Q in accordance with the reproduced carrier signal finely adjusted according to the frequency fine adjustment signal Scnt. In this way, it is possible to generate the baseband signals I and Q which have been frequency-shitted by an amount equal to a frequency error, and supply the same towards the data demodulator 4 and the synchronism signal detecting section 5 through the A/D converter 3. In this way, it becomes possible to obtain an effect of approaching a tuning point, thereby improving the precision of data demodulation or the like in the data demodulator 4 or the like.

In addition, as a further modification of the present embodiment, it is possible to omit the A/D converter 3, provide an A/D-converter for A/D-converting IF signal between the intermediate frequency amplifier 11 and the quadrature demodulator 2a, and use digital circuitry to form a quadrature demodulator 2a, a frequency converter 2c, and carrier wave reproducing units 2b and 2d.

Moreover, when the A/D-converter is provided between the intermediate frequency amplifier 11 and the quadrature demodulator 2a, it is possible to supply an output of the A/D-converter, i.e., digital data corresponding to IF signal, rather than digital data Di and Dq equivalent to baseband signals, to the synchronism signal detecting section 5, thereby detecting a null symbol $\tau$.

[Embodiment 5]

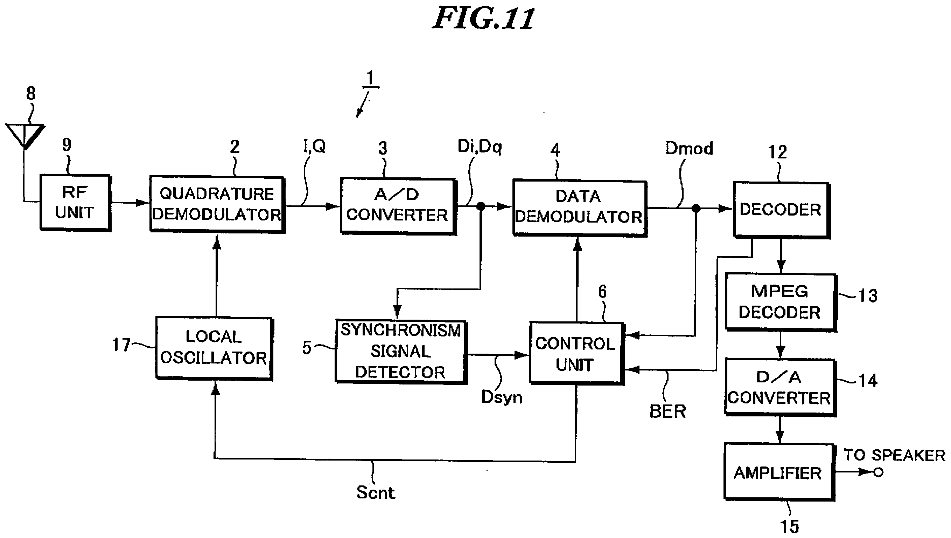

Next, description will be given to explain a further embodiment with reference to Fig. 11. Fig. 11 is a block diagram showing the composition of a digital broadcast receiver of the present embodiment, using the same reference numerals to represent the elements which are the same as or corresponding to those shown in Fig. 8.

Next, description will be given to explain a structural difference between the digital broadcast receiver 1 of the present embodiment shown in Fig. 11 and the digital broadcast receiver shown in Fig. 8. Namely, as mentioned above, the digital broadcast receiver shown in Fig. 8 is so formed that it includes a frequency converter 10 for frequency converting RF signal into IF signal, an intermediate frequency amplifying unit 11, and a local oscillator 7. On the other hand, the broadcast receiver 1 of the present embodiment shown in Fig. 11 is so formed that it includes a quadrature demodulator 2a connected to the output of the RF unit 9, and a local oscillator 17 which supplies a local oscillation signal having a tuning frequency to the quadrature demodulator 2a. In this way, by supplying a frequency fine adjustment signal Scnt to the local oscillator 17 from the control unit 6, it is possible to supply a local oscillation signal having its tuning frequency finely adjusted to the quadrature demodulator 2a.

According to the foregoing constitution, the local oscillator 17 applies a fine adjustment to the tuning frequency of a local oscillation signal set through a tuning operation by a user or the like, in accordance with a frequency fine adjustment signal Scnt. Subsequently, the quadrature demodulator 2a operates in accordance with the local oscillation signal having a finely adjusted tuning frequency, to directly frequency-convert RF reception signal into baseband signals I and Q, and supply the signals to the data demodulator 4 and the synchronism signal detecting section 5 through the A/D converter 3.

Therefore, using the digital broadcast receiver of the present embodiment makes it possible to dispense with a structure necessary for frequency-converting RF reception signal into IF signal, thereby realizing a simplified structure, rendering it possible to highly accurately detect a null symbol period $\tau$, thus improving the precision of both initial synchronization and synchronous reception.

**Claims**

1. A digital broadcast receiver (1) which synchronously receives a signal having null symbol periods, said receiver comprising:

    frequency conversion means for generating an intermediate frequency signal by frequency-converting a reception signal in accordance with a local oscillation signal; and quadrature demodulation means for frequency-converting the intermediate frequency signal into baseband signals in accordance with a reproduced carrier signal; wherein said signal having null symbol periods is the intermediate frequency signal a low pass filter (5a) for envelope-detecting the signal having the null symbol periods and generating an envelope signal;

    average value computing means (5b) for sampling a plurality of digital data of the signal, and computing an average value of the plurality of digital data of the signal each time digital data are sample-inputted and generating an average value signal; and

    synchronism signal judging means (5c) which performs a level comparison between the average value signal and an attenuated envelope signal formed by attenuating the envelope signal with a predetermined attenuation factor, and holds the level of the attenuated envelope signal for a hold period at the output of the low pass filter from a time point at which the level of the average value signal is smaller than the level of the attenuated envelope signal and judges a certain period as a null symbol period contained in a transmission signal, said certain period lasting from the time point at which the level of the average value signal becomes smaller than the level of the attenuated envelope signal until a time point at which the level of the average value signal becomes larger than the level of the attenuated envelope signal during the hold period;

2. The digital broadcast receiver (1) according to claim 1, wherein the low pass filter (5a), the average value computing means (5b) and the synchronism signal judging means (5c) generate the envelope signal and the average value signal and perform the judgment by virtue of digital signal processing.

3. The digital broadcast receiver (1) according to claim 1 or 2, wherein the low pass filter (5a) envelope-detects the average value signal generated by the average value computing means, instead of envelope-detecting the signal having the null symbol periods, thereby generating the envelope signal.

4. The digital broadcast receiver according to claim 1, further comprising:

    data demodulation means for applying a data-demodulation based on digital signal processing to the baseband signals so as to generate demodulation data; and
    control means which, in synchronism with a null symbol period judged by synchronism signal judging means, extracts a phase reference symbol contained in the demodulation data, performs a cross-correlation computation between an extracted phase reference symbol and a pre-stored phase reference symbol, thereby adjusting the frequency of the phase reference symbol in accordance with a frequency error detected from a result of the cross-correlation computation.

5. The digital broadcast receiver according to claim 4, wherein the control means, in performing an initial synchronization, extracts a phase reference symbol contained in the demodulation data generated by the data demodulation means, computes a channel impulse response indicating a response of a propagation way by virtue of a cross-correlation computation between an extracted phase reference symbol and a pre-stored phase reference symbol, and adjusts a sampling start point of data demodulation of the data demodulation means in accordance with a moving amount equivalent to 100% of a time error detected from a result of the cross-correlation computation.

6. The digital broadcast receiver according to claim 5, wherein the control means, after adjusting the frequency of the phase reference symbol, adjusts a sampling start point of data demodulation of the data demodulation means in accordance with a moving amount equivalent to 100% of a time error detected from a result of the computation of a channel impulse response.

7. The digital broadcast receiver according to any one of claims 4 to 6, wherein the control means adjusts the frequency of the local oscillation signal at a time at which the frequency conversion means frequency-converts a reception signal into an intermediate frequency signal, in accordance with an error frequency equivalent to 100% of the frequency error.

8. The digital broadcast receiver according to any one of claims 4 to 6, wherein the control means adjusts the frequency of the reproduced carrier signal at a time at which the quadrature demodulation means frequency-converts an intermediate frequency signal into baseband signals, in accordance with an error frequency equivalent to 100% of the frequency error.

9. The digital broadcast receiver according to any one of claims 4 to 6, wherein the control means adjusts the frequency of the reproduced carrier signal at a time at which the quadrature demodulation means frequency-converts a reception signal into baseband signals, in accordance with an error frequency equivalent to 100% of the frequency error.

10. A synchronism detecting method for use in a digital broadcast receiver which synchronously receives a signal having null symbol periods, said method comprising:

    frequency conversion step for generating an intermediate frequency signal by frequency-converting a reception signal in accordance with a local oscillation signal; and quadrature demodulation step for frequency-converting the intermediate frequency signal into baseband signals in accordance with a reproduced carrier signal, wherein said signal having null symbol periods is the intermediate frequency signal. an envelope signal generating step for envelope-detecting the signal having the null symbol periods and generating an envelope signal;
    an average value computing step for sampling a plurality of digital data of the signal, and computing an average value of the plurality of digital data of the signal each time the digital data are sample-inputted and generating an average value signal;
    a synchronism signal judging step which performs a level comparison between the average value signal and an attenuated envelope signal formed by attenuating the envelope signal with a predetermined attenuation factor, and holds the level of the attenuated envelope signal for a hold period at the output of the low pass filter from a time point at which the level of the average value signal is smaller than the level of the attenuated envelope signal and judges a certain period as a null symbol period contained in a transmission signal, said certain period lasting from the time point at which the level of the average value signal becomes smaller than the level of the attenuated envelope signal until a time point at which the level of the average value signal becomes larger than the level of the attenuated envelope signal during the hold period;

## Patentansprüche

1. Digitaler Rundfunkempfänger (1), der ein Signal, das Nullsymbolperioden aufweist, synchron empfängt, wobei der Empfänger Folgendes umfasst:

Frequenzwandlermittel zum Erzeugen eines Zwischenfrequenzsignals durch Frequenzwandeln eines Empfangssignals gemäß einem lokalen Oszillationssignal; und Quadraturdemodulationsmittel zum Frequenzwandeln des Zwischenfrequenzsignals in Basisbandsignale gemäß einem nachgebildeten Trägersignal; wobei das Signal, das Nullsymbolperioden aufweist, das Zwischenfrequenzsignal ist;
einen Tiefpassfilter (5a) zur Hüllkurvenerfassung des Signals, das die Nullsymbolperioden aufweist, und zum Erzeugen eines Hüllkurvensignals;
Mittelwert-Berechnungsmittel (5b) zum Abtasten mehrerer digitaler Daten des Signals und zum jeweiligen Berechnen eines Mittelwerts der mehreren digitalen Daten des Signals, wenn digitale Daten zum Abtasten eingegeben werden, und Erzeugen eines Mittelwertsignals; und Synchronsignal-Beurteilungsmittel (5c), die einen Pegelvergleich zwischen dem Mittelwertsignal und einem gedämpften Hüllkurvensignal, das durch Dämpfen des Hüllkurvensignals um einen vorbestimmten Dämpfungsfaktor gebildet wird, durchführen und den Pegel des gedämpften Signals über eine Halteperiode ab einem Zeitpunkt, an dem der Pegel des Mittelwertsignals den Pegel des gedämpften Hüllkurvensignals unterschreitet, an dem Ausgang des Tiefpassfilters halten und eine bestimmte Periode als eine Nullsymbolperiode, die in einem Rundfunksignal enthalten ist, beurteilen, wobei die bestimmte Periode von dem Zeitpunkt, an dem der Pegel des Mittelwertsignals den Pegel des gedämpften Hüllkurvensignals unterschreitet, bis zu einem Zeitpunkt, an dem der Pegel des Mittelwertsignals den Pegel des gedämpften Hüllkurvensignals während der Halteperiode überschreitet, dauert.

2. Digitaler Rundfunkempfänger (1) nach Anspruch 1, wobei der Tiefpassfilter (5a), die Mittelwert-Berechnungsmittel (5b) und die Synchronsignal-Beurteilungsmittel (5c) das Hüllkurvensignal und das Mittelwertsignal erzeugen und die Beurteilung mittels digitaler Signalverarbeitung durchführen.

3. Digitaler Rundfunkempfänger (1) nach Anspruch 1 oder 2, wobei der Tiefpassfilter (5a) die Hüllkurve des Mittelwertsignals, das durch die Mittelwert-Berechnungsmittel erzeugt wird, erkennt, anstatt die Hüllkurve des Signals, das die Nullsymbolperioden aufweist, zu erkennen, und damit das Hüllkurvensignal erzeugt.

4. Digitaler Rundfunkempfänger nach Anspruch 1, ferner umfassend:

Datendemodulationsmittel zum Anwenden einer Datendemodulation basierend auf einer digitalen Signalverarbeitung der Basisbandsignale, um Demodulationsdaten zu erzeugen; und Steuermittel, die, synchron mit einer Nullsymbolperiode, die durch Synchronsignalbeurteilungsmittel beurteilt wird, ein Phasenreferenzsymbol, das in den Demodulationsdaten enthalten ist, extrahieren, eine Kreuzkorrelationsberechnung zwischen einem extrahierten Phasenreferenzsymbol und einem vorgespeicherten Phasenreferenzsymbol durchführen und somit die Frequenz des Phasenreferenzsymbols gemäß einem Frequenzfehler, der aus einem Ergebnis der Kreuzkorrelationsberechnung erkannt wird, anpassen.

5. Digitaler Rundfunkempfänger nach Anspruch 4, wobei die Steuermittel, beim Durchführen einer anfänglichen Synchronisation, ein Phasenreferenzsymbol, das in den durch die Datendemodulationsmittel erzeugten Demodulationsdaten enthalten ist, extrahieren, eine Kanalimpulsantwort, die eine Antwort eines Ausbreitungswegs anzeigt, mittels einer Kreuzkorrelationsberechnung zwischen einem extrahierten Phasenreferenzsymbol und einem vorgespeicherten Phasenreferenzsymbol berechnen und einen Abtaststartpunkt der Datendemodulation für die Datendemodulation der Datendemodulationsmittel gemäß einem Bewegungsbetrag anpassen, der 100 % eines Zeitfehlers entspricht, der aus einem Ergebnis der Kreuzkorrelationsberechnung erkannt wird.

6. Digitaler Rundfunkempfänger nach Anspruch 5, wobei die Steuermittel, nach dem Anpassen der Frequenz des Phasenreferenzsymbols, einen Abtaststartpunkt für die Datendemodulation der Datendemodulationsmittel gemäß einem Bewegungsbetrag anpassen, der 100 % eines Zeitfehlers entspricht, der aus einem Ergebnis der Berechnung einer Kanalimpulsantwort erkannt wird.

7. Digitaler Rundfunkempfänger nach einem der Ansprüche 4 bis 6, wobei die Steuermittel die Frequenz des lokalen Oszillationssignals zu einem Zeitpunkt, an dem die Frequenzwandlermittel ein Empfangssignal in ein Zwischenfrequenzsignal frequenzwandeln, gemäß einer Fehlerfrequenz anpassen, die 100 % des Frequenzfehlers entspricht.

8. Digitaler Rundfunkempfänger nach einem der Ansprüche 4 bis 6, wobei die Steuermittel die Frequenz des nachgebildeten Trägersignals, zu einem Zeitpunkt, zu dem die Quadraturdemodulationsmittel ein Zwischenfrequenzsignal in Basisbandsignale frequenzwandeln, gemäß einer Fehlerfrequenz anpassen, die 100 % des Frequenzfehlers entspricht.

9. Digitaler Rundfunkempfänger nach einem der Ansprüche 4 bis 6, wobei die Steuermittel die Frequenz des nachgebildeten Trägersignals, zu einem Zeitpunkt, zu dem die Quadraturdemodulationsmittel ein Empfangssignal in Basisbandsignale frequenzwandeln, gemäß einer Fehlerfrequenz anpassen, die 100 % des Frequenzfehlers entspricht.

10. Synchronisationserkennungsverfahren zur Verwendung in einem digitalen Rundfunkempfänger, der ein Signal, das Nullsymbolperioden aufweist, synchron empfängt, wobei das Verfahren Folgendes umfasst:

einen Frequenzwandlungsschritt zum Erzeugen eines Zwischenfrequenzsignals durch Frequenzwandeln eines Empfangssignals gemäß einem lokalen Oszillationssignal; und einen Quadraturdemodulationsschritt zum Frequenzwandeln des Zwischenfrequenzsignals in Basisbandsignale gemäß einem nachgebildeten Trägersignal, wobei das Signal, das Nullsymbolperioden aufweist, das Zwischenfrequenzsignal ist;
einen Hüllkurvensignal-Erzeugungsschritt zum Hüllkurvenerfassen des Signals, das die Nullsymbolperioden aufweist, und zum Erzeugen eines Hüllkurvensignals;
einen Mittelwert-Berechnungsschritt zum Abtasten mehrerer digitaler Daten des Signals und zum Berechnen eines Mittelwerts der mehreren digitalen Daten des Signals immer dann, wenn digitale Daten zum Abtasten eingegeben werden, und zum Erzeugen eines Mittelwertsignals;
einen Synchronsignal-Beurteilungsschritt, bei dem ein Pegelvergleich zwischen dem Mittelwertsignal und einem gedämpften Hüllkurvensignal, das durch Dämpfen des Hüllkurvensignals um einen vorbestimmten Dämpfungsfaktor gebildet wird, durchgeführt wird und der Pegel des gedämpften Signals über eine Halteperiode ab einem Zeitpunkt, an dem der Pegel des Mittelwertsignals den Pegel des gedämpften Hüllkurvensignals unterschreitet, an dem Ausgang des Tiefpassfilters gehalten wird und eine bestimmte Periode als eine Nullsymbolperiode, die in einem Rundfunksignal enthalten ist, beurteilt wird, wobei die bestimmte Periode von dem Zeitpunkt, an dem der Pegel des Mittelwertsignals den Pegel des gedämpften Hüllkurvensignals unterschreitet, bis zu einem Zeitpunkt, an dem der Pegel des Mittelwertsignals den Pegel des gedämpften Hüllkurvensignals während der Halteperiode überschreitet, dauert.

## Revendications

1. Récepteur de diffusion numérique (1) qui reçoit de manière synchrone un signal ayant des périodes à zéro symbole, ledit récepteur comprenant :

un moyen de conversion de fréquence pour générer un signal de fréquence intermédiaire par conversion de fréquence d'un signal de réception conformément à un signal d'oscillation local ; et un moyen de démodulation en quadrature pour la conversion de fréquence du signal de fréquence intermédiaire en signaux de bande de base conformément à un signal porteur reproduit ; dans lequel ledit signal ayant des périodes à zéro symbole est le signal de fréquence intermédiaire ;
un filtre passe-bas (5a) pour détecter l'enveloppe du signal ayant les périodes à zéro symbole et générer un signal d'enveloppe ;
un moyen de calcul informatique de valeur moyenne (5b) pour échantillonner une pluralité de données numériques du signal et calculer informatiquement une valeur moyenne de la pluralité de données numériques du signal chaque fois que des données numériques sont entrées par échantillonnage et générer un signal de valeur moyenne ; et
un moyen d'estimation de signal de synchronisation (5c) qui effectue une comparaison de niveau entre le signal de valeur moyenne et un signal d'enveloppe atténué formé en atténuant le signal d'enveloppe avec un facteur d'atténuation prédéterminé, et retient le niveau du signal d'enveloppe atténué pendant une période de retenue à la sortie du filtre passe-bas à partir d'un point temporel auquel le niveau du signal de valeur moyenne est plus petit que le niveau du signal d'enveloppe atténué et estime une certaine période comme une période à symbole zéro contenue dans un signal de transmission, ladite certaine période durant du point temporel auquel le niveau du signal de valeur moyenne devient plus petit que le niveau du signal d'enveloppe atténué jusqu'à un point temporel auquel le niveau du signal de valeur moyenne devient plus grand que le niveau du signal d'enveloppe atténué pendant la période de retenue.

2. Récepteur de diffusion numérique (1) selon la revendication 1, dans lequel le filtre passe-bas (5a), le moyen de calcul informatique de valeur moyenne (5b) et le moyen d'estimation de signal de synchronisation (5c) génèrent le signal d'enveloppe et le signal de valeur moyenne et effectuent l'estimation au moyen d'un traitement de signal numérique.

3. Récepteur de diffusion numérique (1) selon la revendication 1 ou 2, dans lequel le filtre passe-bas (5a) détecte l'enveloppe du signal de valeur moyenne généré par le moyen de calcul informatique de valeur moyenne, au lieu de détecter l'enveloppe des signaux ayant les périodes à zéro symbole, en générant ainsi le signal d'enveloppe.

4. Récepteur de diffusion numérique selon la revendication 1, comprenant en outre :

un moyen de démodulation de données pour appliquer une démodulation de données sur la base d'un traitement de signal numérique aux signaux de bande de base de manière à générer des données de démodulation ; et
un moyen de commande, qui en synchronisation avec une période à zéro symbole estimée par un moyen d'estimation de signal de synchronisation, extrait un symbole de référence de phase contenu dans les données de démodulation, effectue un calcul informatique de corrélation croisée entre un symbole de référence de phase extrait et un symbole de référence de phase prémémorisé, en ajustant ainsi la fréquence du symbole de phase de référence conformément à une erreur de fréquence détectée d'après un résultat de calcul informatique de corrélation croisée.

5. Récepteur de diffusion numérique selon la revendication 4, dans lequel le moyen de commande, lorsqu'il effectue une synchronisation initiale, extrait un symbole de référence de phase contenu dans les données de démodulation générées par le moyen de démodulation de données, calcule informatiquement une réponse impulsionnelle de canal en indiquant une réponse d'une voie de propagation au moyen d'un calcul informatique de corrélation croisée entre un symbole de référence de phase extrait et un symbole de référence de phase prémémorisé, et ajuste un point de début d'échantillonnage de démodulation de données du moyen de démodulation de données conformément à une quantité de déplacement équivalente à 100 % d'une erreur temporelle détectée d'après un résultat du calcul informatique de corrélation croisée.

6. Récepteur de diffusion numérique selon la revendication 5, dans lequel le moyen de commande, après l'ajustement de la fréquence du symbole de référence de phase, ajuste un point de début d'échantillonnage de démodulation de données du moyen de démodulation de données conformément à une quantité de déplacement équivalente à 100 % d'une erreur temporelle détectée d'après un résultat du calcul informatique d'une réponse impulsionnelle de canal.

7. Récepteur de diffusion numérique selon une des revendications 4 à 6, dans lequel le moyen de commande ajuste la fréquence du signal d'oscillation local à un temps auquel le moyen de conversion de fréquence convertit la fréquence d'un signal de réception en un signal de fréquence intermédiaire, conformément à une fréquence d'erreur équivalente à 100 % de l'erreur de fréquence.

8. Récepteur de diffusion numérique selon une quelconque des revendications 4 à 6, dans lequel le moyen de commande ajuste la fréquence du signal porteur reproduit à un temps auquel le moyen de démodulation de quadrature convertit la fréquence d'un signal de fréquence intermédiaire en signaux de bande de base, conformément à une erreur de fréquence équivalente à 100 % de l'erreur de fréquence.

9. Récepteur de diffusion numérique selon une quelconque des revendications 4 à 6, dans lequel le moyen de commande ajuste la fréquence du signal porteur reproduit à un temps auquel le moyen de démodulation de quadrature convertit la fréquence d'un signal de réception en signaux de bande de base, conformément à une fréquence d'erreur équivalente à 100 % de l'erreur de fréquence.

10. Procédé de détection de synchronisation à utiliser dans un récepteur de diffusion numérique qui reçoit en continu un signal ayant des périodes à zéro symbole, ledit procédé comprenant :

une étape de conversion de fréquence pour générer un signal de fréquence intermédiaire par conversion de fréquence d'un signal de réception conformément à un signal d'oscillation local ; et une étape de démodulation de quadrature pour convertir la fréquence du signal de fréquence intermédiaire en signaux de bande de base conformément à un signal porteur reproduit, dans lequel ledit signal ayant des périodes à zéro symbole est le signal de fréquence intermédiaire ;

une étape de génération de signal d'enveloppe pour détecter l'enveloppe du signal ayant les périodes à zéro symbole et générer un signal d'enveloppe ;

une étape de calcul informatique de valeur moyenne pour échantillonner une pluralité de signaux numérique du signal, et calculer informatiquement une valeur moyenne de la pluralité de données numériques du signal chaque fois que les données numériques sont entrées par échantillonnage et générer un signal de valeur moyenne ;

une étape d'estimation de signal de synchronisation qui effectue une comparaison de niveau entre le signal de valeur moyenne et un signal d'enveloppe atténué formé en atténuant le signal d'enveloppe avec un facteur d'atténuation prédéterminé, et retient le niveau du signal d'enveloppe atténué pendant une période de retenue à la sortie du filtre passe-bas à partir d'un point temporel auquel le niveau du signal de valeur moyenne est plus petit que le niveau du signal d'enveloppe atténuée et estime une certaine période comme une période à symbole zéro contenu dans un signal de transmission, ladite certaine période durant du point temporel auquel le niveau du signal de valeur moyenne devient plus petit que le niveau du signal d'enveloppe atténué jusqu'à un point temporel auquel le niveau du signal de valeur moyenne devient plus grand que le niveau du signal d'enveloppe atténué pendant la période de retenue.

## FIG.1 (a)

1

## FIG.1 (b)

*FIG.2 (a)*

NULL SYMBOL

LEVEL

Di,Dq

TIME

*FIG.2 (b)*

LEVEL

Denv

TIME

*FIG.2 (c)*

LEVEL

Dav

TIME

*FIG.2 (d)*

Dav

LEVEL

Datt

TIME

T

*FIG.2 (e)*

CONSTANT LEVEL   Dav

LEVEL

Di,Dq

Datt

TIME

ts      te      Dsyn

"1"      "0"

$\tau$

FIG.3 (a)

8 — RF UNIT 9 — FREQUENCY CONVERTER 10 — INTERMEDIATE FREQUENCY AMPLIFIER 11

LOCAL OSCILLATOR 7

QUADRATURE DEMODULATOR 2a

CARRIER WAVE REPRODUCING UNIT 2b

fc

I,Q

A/D CONVERTER 3

SYNCHRONISM SIGNAL DETECTOR 5

Di,Dq

DATA DEMODULATOR 4

CONTROL UNIT 6

Dsyn

Scnt

Dmod

DECODER 12

MPEG DECODER 13

D/A CONVERTER 14

AMPLIFIER 15

TO SPEAKER

BER

1

FIG.3 (b)

Di,Dq

LOW PASS FILTER 5a

AVERAGE VALUE COMPUTING UNIT 5b

Denv

ATTENUATOR 5ca

Datt

Dav

COMPARATOR 5cb

COMPARATOR 5cc

Dsyn

5

20

# FIG.4

## FIG.5

```
        ┌─────────────────┐
        │  SYNCHRONIZING  │
        │     PROCESS     │
        └────────┬────────┘
                 │
        ┌────────┴────────┐
   S1───│   SYNCHRONISM   │
        │    DETECTION    │
        └────────┬────────┘
                 │
        ┌────────┴────────┐
   S2───│    FREQUENCY    │
        │ ERROR DETECTION │
        └────────┬────────┘
                 │
             ╱───┴───╲          SECOND TIME ONWARDS
   S3────── ╱ INITIAL ╲──────────────────────────────┐
            ╲    ?    ╱                               │
             ╲───┬───╱                               │ S11
                 │ INITIAL                      ╱─────┴─────╲     df>1/2
        ┌────────┴────────┐                    ╱  FREQUENCY  ╲─────────┐
   S4───│    FREQUENCY    │                    ╲  ERROR (df) ╱         │
        │      SHIFT      │                     ╲     ?     ╱          │
        └────────┬────────┘                      ╲────┬────╱           │
                 │                                    │ df<1/2         │
        ┌────────┴────────┐                  ┌────────┴────────┐       │
   S5───│ CIR COMPUTATION │                  │ CIR COMPUTATION │──S12  │
        │FFT WINDOW POSITION                 │FFT WINDOW POSITION      │
        │ ERROR DETECTION │                  │ ERROR DETECTION │       │
        └────────┬────────┘                  └────────┬────────┘       │
                 │                                    │                │
             ╱───┴───╲       NO PEAK         ┌────────┴────────┐       │
   S6────── ╱  PEAK   ╲──────────────┐       │   FFT WINDOW    │──S13  │
            ╲JUDGMENT ╱              │       │    POSITION     │       │
             ╲   ?   ╱               │       │ CORRECTION 50%  │       │
              ╲──┬──╱                │       └────────┬────────┘       │
                 │ HAS PEAK          │ S7            │◄────────────────┘
        ┌────────┴────────┐  ┌───────┴───────┐┌──────┴────────┐
   S8───│    INITIAL      │  │    INITIAL    ││TUNING FREQUENCY│──S14
        │ SYNCHRONIZATION │  │SYNCHRONIZATION││ CORRECTION 50% │
        │  IS SUCCESSFUL  │  │  IS A FAILURE ││               │
        └────────┬────────┘  └───────┬───────┘└──────┬────────┘
                 │                   │                │
        ┌────────┴────────┐          │            ╱───┴───╲
   S9───│FFT WINDOW POSITION         │           ╱JUDGMENT ╲    NOT YET
        │ CORRECTION 100% │          │          ╱TIME HAS PASSED──────┐
        └────────┬────────┘          │          ╲     ?    ╱   S15     │
                 │                   │           ╲───┬────╱            │
        ┌────────┴────────┐          │               │ YES            │
  S10───│TUNING FREQUENCY │          │           ╱───┴───╲  S16        │
        │ CORRECTION 100% │          │          ╱SYNCHRONIZATION       │
        └────────┬────────┘          │         ╱ ERROR JUDGMENT╲ ERROR IS LARGE
                 │                   │         ╲       ?       ╱───────┐│
                 │                   │          ╲──────┬──────╱        ││
                 │                   │  S17    ERROR IS SMALL      S18 ││
                 │                   │  ┌───────┴───────┐ ┌────────────┴┤
                 │                   │  │SYNCHRONIZATION│ │SYNCHRONIZATION
                 │                   │  │ IS SUCCESSFUL │ │ IS A FAILURE│
                 │                   │  └───────┬───────┘ └──────┬──────┘
                 │◄──────────────────┘          │                │
                 │                              │◄───────────────┘
        ┌────────┴────────┐
        │       END       │
        └─────────────────┘
```

22

## FIG.6

TRANSMISSION SYMBOL(n)

— (n−1) —→                                    ←— (n+1)

| GUARD INTERVAL | EFFECTIVE SYMBOL |

FFT WINDOW
(EFFECTIVE SYMBOL START POSITION)

FFT WINDOW
(GUARD INTERVAL START POSITION)

FFT WINDOW
(HAVING REACHED A TRANSMISSION SYMBOL n−1)

FFT WINDOW
(HAVING REACHED A TRANSMISSION SYMBOL n+1)

| A PERIOD EQUIVALENT TO A GUARD INTERVAL | A PERIOD EQUIVALENT TO AN EFFECTIVE SYMBOL |

0

# FIG.7

## FIG.8

EP 1 850 517 B1

## FIG.9 (a)

## FIG.9 (b)

FIG.10 (a)

FIG.10 (b)

EP 1 850 517 B1

## FIG.11

EP 1 850 517 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004208286 A